# EUROPÄISCHE PATENTSCHRIFT

(11) **EP 0 841 539 B1**
(45) Veröffentlichungstag und Bekanntmachung des Hinweises auf die Patenterteilung: **21.03.2001**
(21) Anmeldenummer: 97119215.8
(22) Anmeldetag: 04.11.1997
(51) Int. Cl.: G01D 5/347

(54) **Positionsmesseinrichtung und Verfahren zur Montage einer Abtasteinheit einer Positionsmesseinrichtung**
Position measuring device and process for mounting a pickup-unit in such a measuring device
Dispositif pour la mesure de position et procédé de montage d'un dispositif de lecture dans un tel dispositif pour la mesure de position

(30) Priorität: 06.11.1996 DE 19645605
(43) Veröffentlichungstag der Anmeldung: 13.05.1998
(73) Patentinhaber: Dr. Johannes Heidenhain GmbH, 83292 Traunreut (DE)
(72) Erfinder: Feichtinger, Kurt, 83349 Palling (DE)

(56) Entgegenhaltungen:
- DE-A- 3 740 744
- US-A- 5 103 917

## Beschreibung

Die Erfindung betrifft eine Positionsmeßeinrichtung gemäß dem Oberbegriff des Anspruches 1 und ein Verfahren zur Montage einer Abtasteinheit einer Positionsmeßeinrichtung gemäß dem Oberbegriff des Anspruches 11.

Bei Positionsmeßeinrichtungen wird eine Maßverkörperung von einem Abtastelement abgetastet. Bei dieser Abtastung werden positionsabhängige elektrische Abtastsignale gewonnen, die einer Folgeelektronik, beispielsweise einem Zähler oder einer numerischen Steuerung zugeführt werden. Die Qualität der Abtastsignale ist abhängig vom Abtastabstand, weshalb es erforderlich ist, das Abtastelement in einem genau definierten Abstand relativ zur Maßverkörperung zu montieren.

In der EP 0 177 711 B1 ist eine Positionsmeßeinrichtung beschrieben, bei der ein Abtastelement in Form einer Abtastteilung in einer Führung zur Einstellung des Abtastabstandes verschiebbar gelagert ist und in jeder Stellung arretierbar ist. Der erforderliche Abtastabstand wird durch eine Abstandsfolie vorgegeben, die während der Montage zwischen Maßverkörperung und Abtastteilung eingefügt wird. Die Verschiebung der Abtastteilung erfolgt bis zur Klemmung der Folie, danach wird die Abtastteilung arretiert und die Folie entfernt.

Nachteilig bei dieser bekannten Positionsmeßeinrichtung ist die Notwendigkeit einer separaten Folie als Abstandshalter sowie das seitliche Entfernen einer geklemmten Folie.

In der EP 0 280 390 A1 und der DE 37 40 744 A1 ist eine Positionsmeßeinrichtung in Form eines Drehgebers bekannt, der keine eigene Lagerung aufweist. Derartige Drehgeber werden als Einbaudrehgeber bezeichnet. Die Relativlage von Abtasteinheit zu Teilscheibe ist bei Einbaudrehgebern erst im angebauten Zustand an die zu messenden Objekte festgelegt. Zur Vereinfachung des Anbaus ist im Drehgeber ein Fixierelement bzw. Verbindungsteil integriert, das mit der Nabe der Teilscheibe in Kontakt steht und während des Anbaus die Relativlage von Abtasteinheit zu Teilscheibe festlegt. Nach erfolgter Montage der Teilscheibe an das eine zu messende Objekt und der Abtasteinheit an das andere zu messende Objekt wird das Fixierelement bzw. das Verbindungsteil entfernt.

Der Erfindung liegt die Aufgabe zugrunde, eine Positionsmeßeinrichtung zu schaffen, die einfach aufgebaut ist und mit der der erforderliche Abtastabstand einfach einstellbar ist.

Diese Aufgabe wird durch die Positionsmeßeinrichtung mit den Merkmalen des Anspruches 1 gelöst.

Weiterhin soll ein Verfahren angegeben werden, mit dem eine einfache Montage einer Abtasteinheit einer Positionsmeßeinrichtung gewährleistet ist.

Diese Aufgabe wird durch ein Verfahren gemäß dem Anspruch 11 gelöst.

Die Vorteile der Erfindung liegen insbesondere darin, daß der Abtastabstand bereits durch die Bauteile der Abtasteinheit selbst festgelegt ist und keine verlierbare Folie benötigt wird.

Anhand von Ausführungsbeispielen wird die Erfindung näher erläutert:

### Es zeigt

- Figur 1: eine erste Positionsmeßeinrichtung in einer Montagestellung im Schnitt,
- Figur 2: einen vergrößerten Ausschnitt der Figur 1,
- Figur 3: die Positionsmeßeinrichtung gemäß Figur 1 in der Betriebsstellung,
- Figur 4: einen vergrößerten Ausschnitt der Figur 3,
- Figur 5: eine Draufsicht der ersten Positionsmeßeinrichtung in axialer Richtung,
- Figur 6: einen Schnitt VI-VI der Figur 5,
- Figur 7: eine zweite Positionsmeßeinrichtung in einer Draufsicht in axialer Richtung,
- Figur 8: einen Schnitt VIII-VIII der Figur 7,
- Figur 9: einen vergrößerten Ausschnitt der zweiten Positionsmeßeinrichtung in der Montagestellung und
- Figur 10: einen vergrößerten Ausschnitt der zweiten Positionsmeßeinrichtung in der Betriebsstellung.

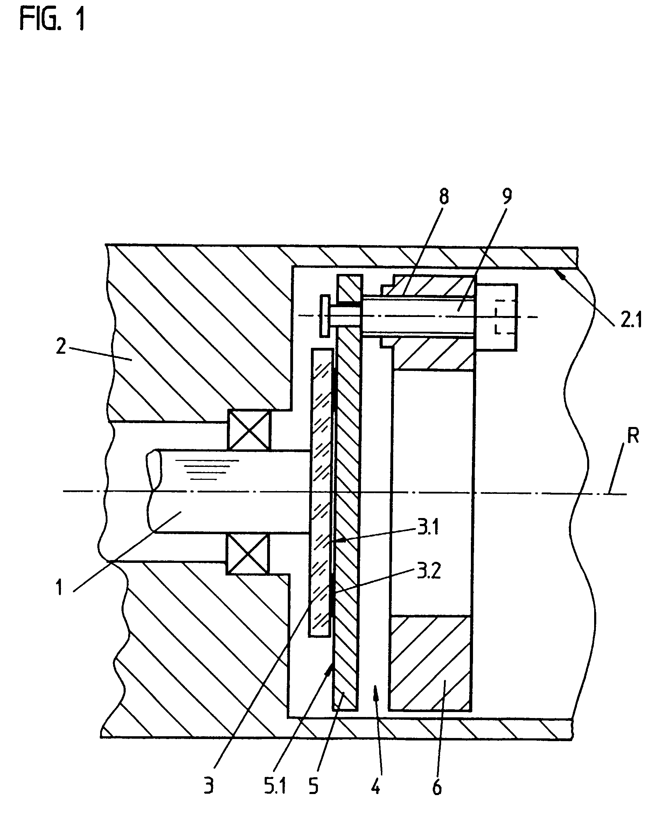

In Figur 1 ist eine Winkelmeßeinrichtung dargestellt, die an einer Antriebseinrichtung befestigt ist. Die Antriebseinrichtung ist ein Motor mit einer gelagerten Welle 1, deren Drehwinkel relativ zu dem Stator 2 mit der Winkelmeßeinrichtung gemessen werden soll. Hierzu ist an der Welle 1 eine Maßverkörperung in Form einer Teilscheibe 3 befestigt. Diese Befestigung kann durch Schrauben, Kleben, Pressen oder Klemmen erfolgen. Die Teilscheibe 3 trägt auf einer Ebene 3.1 eine Teilung 3.2 bzw. eine Codierung, die lichtelektrisch, magnetisch, kapazitiv oder induktiv abtastbar ist.

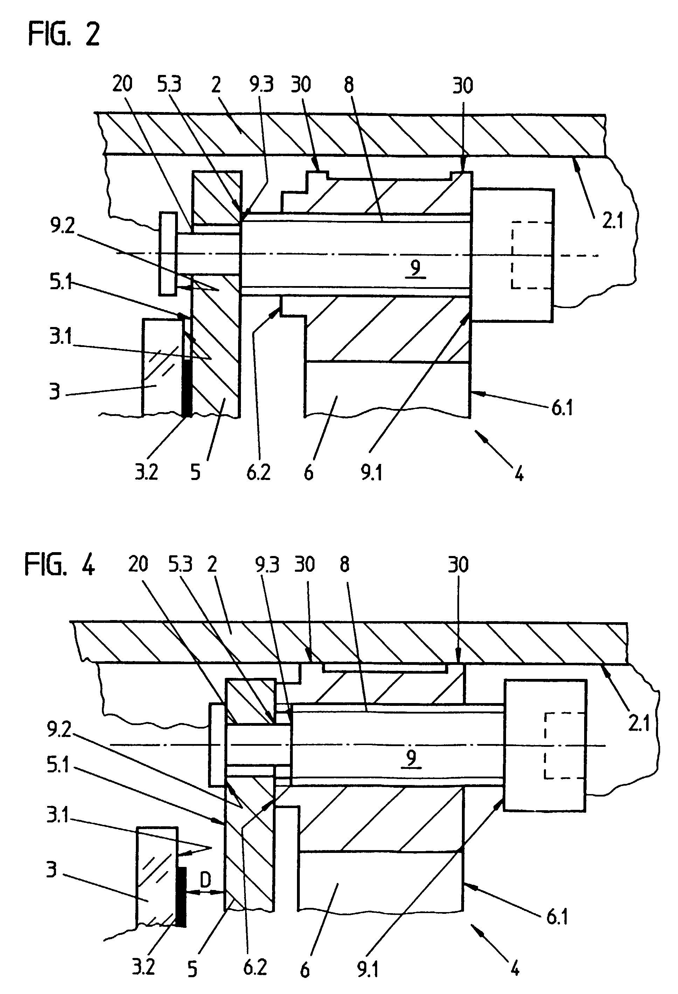

Die Teilung 3.2 wird bei der Positionsmessung in an sich bekannter Weise von einer Abtasteinheit 4 abgetastet. Die Abtasteinheit 4 besteht aus einem Abtastelement 5 und einem Montageelement 6. Das Abtastelement 5 ist über eine Führung an dem Montageelement 6 in Richtung der Teilung 3.2 - also senkrecht zur Ebene 3.1 - verschiebbar gelagert. Die Führung wird im Beispiel durch eine Gewindebohrung 8 im Montageelement 6 gebildet, in der eine Schraube 9 verdrehbar gelagert ist. An einem Ende der Schraube 9 ist das Abtastelement 5 derart befestigt, daß es relativ zum Montageelement 6 in zwei definierte Bezugspositionen verschiebbar ist. Die Verschiebung erfolgt durch Verdrehen der Schraube 9, weshalb die Schraube 9 auch als Positionierelement bezeichnet werden kann. Die erste Bezugsposition - auch Montagestellung genannt - ist in den Figuren 1 und 2 dargestellt. In diesem Zustand wirkt eine erste axial wirkende Anschlagsfläche 9.1 der Schraube 9 mit einer ersten axial wirkenden Anschlagfläche 6.1 des Montageelementes 6 zusammen. Ebenso wirkt eine Anschlagfläche 9.3 der Schraube 9 mit einer Anschlagfläche 5.3 des Abtastelementes 5 zusammen.

In dieser ersten Bezugsposition wird die Abtasteinheit 4 mit dem Stator 2 der Antriebseinrichtung drehsteif gekoppelt. Hierzu wird die Abtasteinheit 4 axial zu der Teilungsebene 3.1 in den Tubus 2.1 geführt, bis das Abtastelement 5 mit der Teilscheibe 3 in Kontakt steht. In diesem Zustand wird die Abtasteinheit 4 mittels dem Montageelement 6 an dem Stator 2 fixiert.

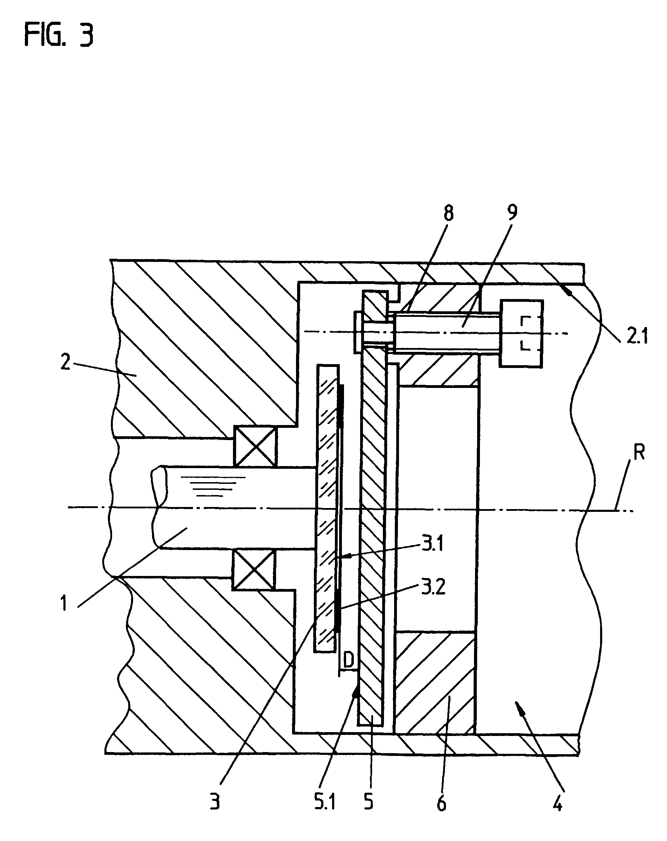

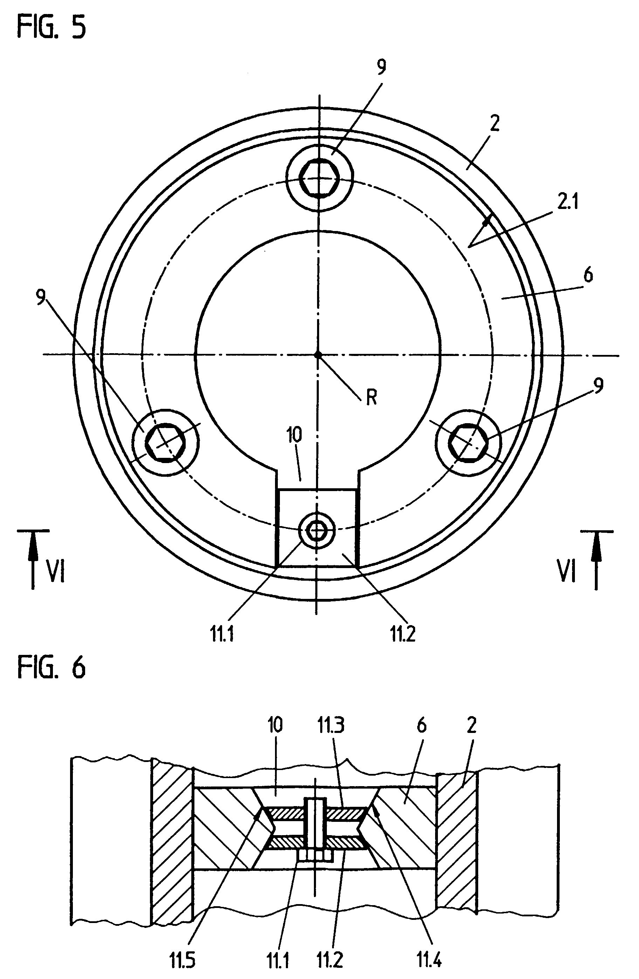

Zur Einstellung des erforderlichen Abtastabstandes D wird nun die Schraube 9 verdreht, bis eine zweite Anschlagfläche 6.2 des Montageelementes 6 mit einer zweiten Anschlagfläche 9.2 der Schraube 9 zusammenwirkt. Diese zweite Bezugsposition - auch Betriebsstellung genannt - ist in den Figuren 3 und 4 dargestellt. Im Beispiel wirkt diese zweite Anschlagfläche 6.2 des Montageelementes 6 unter Zwischenschaltung der Scheibe 5 mit der zweiten Anschlagfläche 9.2 der Schraube 9 zusammen. Der Abtastabstand ist in der Praxis etwa 0,5 bis 1 mm.

Wesentlich ist, daß das Abtastelement 5 mit Hilfe der Schraube 9 in zwei Bezugspositionen relativ zum Montageelement 6 bewegbar ist, wobei die Bezugspositionen durch Teile der Abtasteinheit 4 selbst vorgegeben sind. Durch den Abstand der beiden Bezugspositionen ist der Abtastabstand D bestimmt. Die Verschiebung von der ersten zur zweiten Bezugsposition erfolgt senkrecht zur Teilungsebene 3.1, bei der dargestellten Winkelmeßeinrichtung somit in Richtung der Drehachse R. Die Anschlagflächen 6.1, 6.2, 9.1 und 9.2 verlaufen senkrecht zur Drehachse R.

Die Winkelmeßeinrichtung, anhand der die Erfindung beispielhaft erläutert ist, ist eine induktiv arbeitende Einrichtung, wie sie im Prinzip in der EP 0 182 085 B1 beschrieben ist. Die Teilscheibe 3 besteht aus elektrisch nichtleitfähigem Material, und auf der Ebene 3.1 ist eine inkrementale Teilung aus voneinander beabstandeten elektrisch leitenden Bereichen 3.2 aufgebracht. Das Abtastelement 5 ist eine Platine, auf dessen Oberfläche 5.1 Erregerund Sensorwicklungen in Dünnschichttechnik aufgebracht sind. Die Platine 5 ist ebenfalls scheibenförmig ausgebildet. Um die relativ große und labile Platine 5 definiert relativ zum Montageelement 6 verschieben zu können, können drei um 120° gegeneinander versetzte Schrauben 9 als Positionierelemente vorgesehen sein, wie aus Figur 5 ersichtlich ist.

In der Figur 2 und 4 ist schematisch dargestellt, wie die Schraube 9 in einem Langloch 20 des Abtastelementes 5 (Platine) bewegt wird. Bei der Einstellung des Abtastabstandes erfolgt eine axiale Verschiebung der Schraube 9 in dem Langloch 20. Bei der Spreizung des Montageelementes 6 bewegt sich die Schraube 9 radial nach außen, weshalb die Längsachse des Langloches von der Achse R ausgehend 20 radial nach außen gerichtet verläuft. Der Durchmesser des Langloches 20 senkrecht zur Längsachse entspricht exakt dem Durchmesser der eingreifenden Schraube 9. Durch das Vorsehen von mehreren - z.B. drei um 120° - versetzten Langlöchern ist gewährleistet, daß sich die Lage des Abtastelementes 5 bei der Spreizung des Montageelementes 6 nicht ändert.

Nachfolgend wird eine bevorzugte Variante des Montageelementes 6 beschrieben. Das Montageelement 6 gemäß den Figuren 1 bis 6 ist ein ringförmiges Teil, dessen Außendurchmesser geringfügig kleiner ist als der Innendurchmesser des Stators 2. Wie in Figur 5 dargestellt ist, ist in dem Montageelement 6 ein radial verlaufender Schlitz 10 vorgesehen. Dieser Schlitz 10 ermöglicht ein Aufspreizen des Montageelementes 6 und somit eine Vergrößerung des äußeren Durchmessers. Zur radialen Spreizung ist ein Spreizelement 11 vorgesehen. Es besteht gemäß Figur 6 aus einer Schraube 11.1, mit der zwei in axialer Richtung hintereinander angeordnete Klemmelemente 11.2 und 11.3 gegenläufig bewegbar sind. Die Klemmelemente 11.2 und 11.3 wirken mit konischen Flächen 11.4 und 11.5 des Montageelementes 6 zusammen, wo sie sich abstützen. Durch Drehen der Schraube 11.1 werden die beiden Klemmelemente 11.2, 11.3 aneinander gezogen, wobei sich durch die Keilwirkung der Spalt 10 und somit der Außendurchmesser des Montageelementes 6 vergrößert. Besonders vorteilhaft ist diese radiale Klemmung zwischen dem Stator 2 und der Abtasteinheit 4, wenn die Abtasteinheit 4 direkt in einen Tubus 2.1 eines Motors eingesetzt werden soll, da bei dieser Montage keine Bohrungen am Motor erforderlich sind. In diesem Fall ist der Stator 2 das Gehäuse oder der Flansch (Motorlagerschild) des Elektromotors.

Die radiale Klemmung bedeutet eine Klemmung bzw. Spreizung in eine Richtung, die zumindest weitgehend senkrecht zur Drehachse R verläuft. Die radiale Klemmung kann an einer inneren oder äußeren Umfangsfläche des Stators 2 wirken.

In nicht gezeigter Weise kann das Klemmelement zur Spreizung des Montageelementes 6 auch eine konische Schraube sein, deren Konus mit einer korrespondierenden Bohrung zusammenwirkt. Weiterhin kann eine radiale Klemmung auch mittels einer Exzenterschraube erfolgen, welche in dem Schlitz 10 eingreift oder welche direkt eine Klemmung bewirkt, indem sie im Montageelement axial eingeschraubt ist und die exzentrisch verlaufende Umfangsfläche des Schraubenkopfes mit dem Tubus 2.1 durch Vertreten der Schraube in Kontakt gebracht wird.

Das Betätigungselement - im Beispiel eine Schraube 11.1 - zur Einleitung der radialen Klemmung ist parallel zur Drehachse R ausgerichtet und axial zugänglich und betätigbar, was die Montage erheblich vereinfacht.

In den Figuren 2 und 4 eine vorteilhafte Ausgestaltung des Montageelementes 6 schematisch dargestellt. Das Montageelement 6 besitzt Vorsprünge 30, mit denen es sich bei der radialen Klemmung am Tubus 2.1 abstützt.

Anstelle der Schraube 9 kann auch ein anderes Positionierelement vorgesehen sein, mit dem zwei Bezugspositionen einstellbar sind. Besonders vorteilhaft ist es, wenn das Positionierelement axial zugänglich und betätigbar ist.

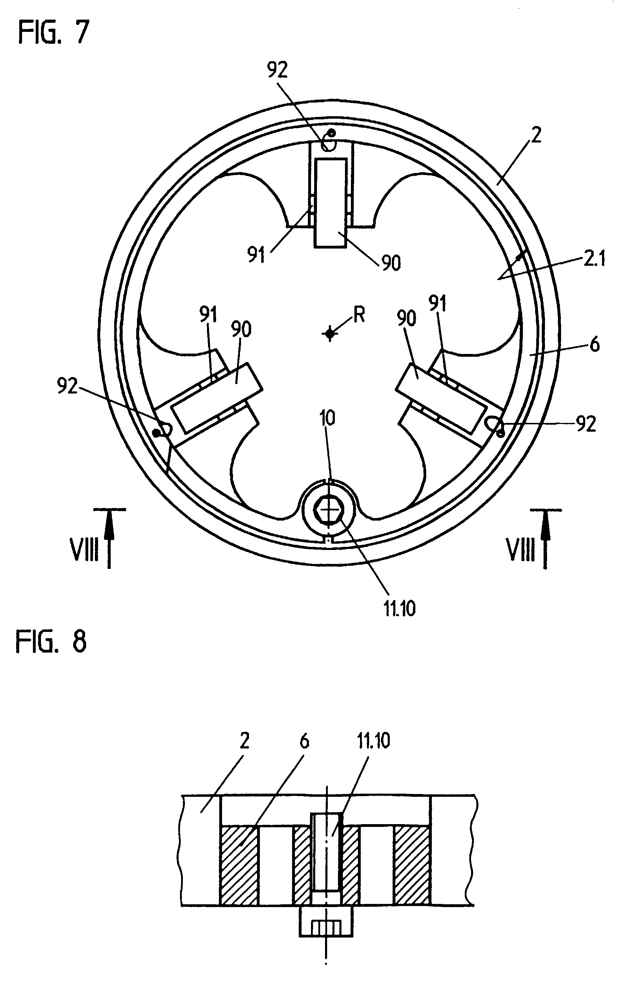

In den Figuren 7 bis 10 ist eine zweite Ausführung einer erfindungsgemäß ausgeführten Winkelmeßeinrichtung dargestellt. Gleiche Bauteile sind mit den gleichen Bezugszeichen wie beim ersten Ausführungsbeispiel versehen.

Die Teilscheibe 3 trägt auf der Ebene 3.1 wiederum eine Teilung 3.2, die lichtelektrisch, magnetisch, kapazitiv oder induktiv abtastbar ist. Das Abtastelement 5 ist an dem Montagelement 6 axial verschiebbar gelagert. Die Verschiebung erfolgt durch Betätigen eines Hebels 90. Das Positionierelement ist in diesem Beispiel somit der Hebel 90. Wie in Figur 7 dargestellt ist, sind im Montagelement 6 drei um 120° gegeneinander versetzte Hebel 90 über jeweils eine Drehachse 91 schwenkbar gelagert.

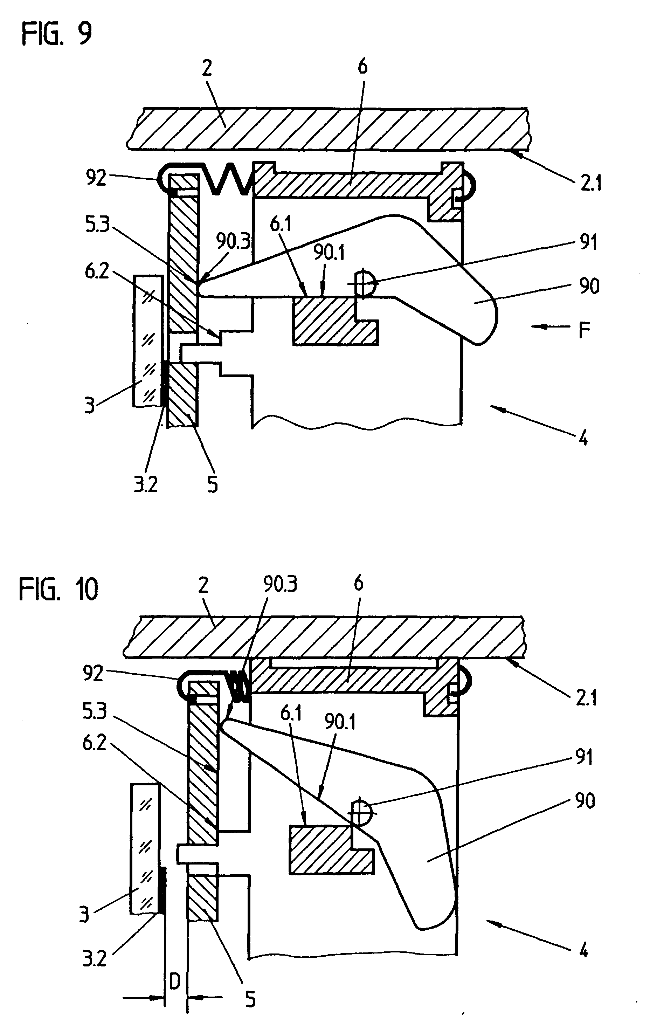

Die erste Bezugsposition - auch Montagestellung genannt - ist in Figur 9 dargestellt. Der Hebel 90 definiert für das Abtastelement 5 die erste Bezugsposition. Das Abtastelement 5 stützt sich mit einer Anschlagfläche 5.3 an einer Anschlagfläche 90.3 des Hebels 90 axial ab. Das Abtastelement 5 wird mittels einer Feder 92 an den Anschlag 90.3 gedrängt. Der Hebel 90 stützt sich mit einer Anschlagfläche 90.1 an einer Anschlagfläche 6.1 des Montageelementes 6 ab. Dadurch wird das Abtastelement 5 in einem definierten Abstand zum Montageelement 6 gehalten.

In diesem Zustand wird die Abtasteinheit 4 axial in Richtung der Teilung 3.2 in den Tubus 2.1 geführt, bis das Abtastelement 5 mit der Teilscheibe 3 in Kontakt steht. In diesem Zustand wird die Abtasteinheit 4 über das Montageelement 6 an dem Stator 2 fixiert.

Zur Einstellung des Abtastabstandes D werden die drei Hebel 90 betätigt, indem jeder um seine Drehachse 91 verschwenkt wird. Die Richtung der Betätigung ist in Figur 9 mit F bezeichnet. In nicht dargestellter Weise können die drei Hebel auch mit einer Einrichtung gemeinsam betätigt werden. Das Abtastelement 5 wird durch Betätigen der Hebel 90 in eine zweite Bezugsposition relativ zum Montageelement 6 bewegt. Diese zweite Bezugsposition - auch Betriebsstellung genannt - ist in Figur 10 gezeigt. Eine Anschlagfläche 6.2 des Montageelementes 6 wirkt mit einer Anschlagfläche 5.3 des Abtastelementes 5 zusammen.

Das Montageelement 6 des zweiten Ausführungsbeispiels entspricht dem des ersten Beispiels, mit dem Unterschied, daß das Spreizelement 11 eine Schraube 11.10 ist. Die Schraube 11.10 wird in das Montageelement 6 eingeschraubt, bis sich der Schraubenkopf am Montageelement 6 abstützt. Durch Weiterdrehen der Schraube 11.10 bewirken die Gewindegänge der Schraube 11.10 ein radiales Aufspreizen des geschlitzten ringförmigen Montageelementes 6 und somit eine radiale Klemmung der Abtasteinheit 4 im Stator 2. Der Stator 2 kann wiederum das Gehäuse oder der Flansch eines Elektromotors sein.

Anstelle der dargestellten Platine 5 als Abtastelement können erfindungsgemäß auch andere induktiven Abtastelemente oder aber auch magnetfeldempfindliche, kapazitive oder lichtempfindliche Abtastelemente montiert werden. Bei lichtelektrischen Positionsmeßeinrichtungen kann das Abtastelement auch nur eine an sich bekannte Abtastplatte (Schlitzblende) oder ein Halbleitersubstrat mit mehreren lichtempfindlichen Bereichen sein.

Die Erfindung ist auch bei Längenmeßeinrichtungen einsetzbar.

## Patentansprüche

1. Positionsmeßeinrichtung zur Messung der Relativlage zweier relativ zueinander bewegbarer Objekte (1, 2), bei der eine Maßverkörperung (3) von einem Abtastelement (5) einer Abtasteinheit (4) abgetastet wird, wobei die Maßverkörperung (3) an dem ersten Objekt (1) befestigt ist und die Abtasteinheit (4) mittels eines Montageelementes (6) an dem zweiten Objekt (2) befestigbar ist, dadurch gekennzeichnet, daß in der Abtasteinheit (4) ein Positioniermittel (9; 90) integriert ist, mit dem das Abtastelement (5) relativ zum Montageelement (6) von einer ersten Bezugsposition in eine zweite Bezugsposition verschiebbar ist, daß weiterhin die Bezugspositionen durch das Zusammenwirken von in der Abtasteinheit (4) integrierten Elementen (5, 6, 9; 5, 6, 90) vorgegeben sind, wobei durch die Verschiebung der Abtastabstand (D) zwischen der Maßverkörperung (3) und dem Abtastelement (5) festgelegt ist.

2. Positionsmeßeinrichtung nach Anspruch 1, dadurch gekennzeichnet, daß die Maßverkörperung (3) eine auf einer Welle (1) befestigte um eine Drehachse (R) drehbare Scheibe (3) ist, auf dessen senkrecht zur Drehachse (R) liegender Oberfläche (3.1) eine Teilung (3.2) vorgesehen ist, und daß das Abtastelement (5) über das Positioniermittel (9; 90) an dem Montageelement (6) axial vorschiebbar geführt ist.

3. Positionsmeßeinrichtung nach Anspruch 1 oder 2, dadurch gekennzeichnet, daß das Montageelement (6) eine erste Anschlagfläche (6.1) aufweist, mit der eine erste Anschlagfläche (9.1; 90.1) des Positioniermittels (9; 90) in der ersten Bezugsposition zusammenwirkt, und daß das Positioniermittel (9; 90) und/oder das Montageelement (6) zweite Anschlagflächen (6.2, 9.2) aufweisen, welche die zweite Bezugsposition festlegen.

4. Positionsmeßeinrichtung nach Anspruch 3, dadurch gekennzeichnet, daß das Positioniermittel eine Schraube (9) ist, die über ein Gewinde (8) im Montageelement (6) axial verschiebbar ist.

5. Positionsmeßeinrichtung nach Anspruch 3, dadurch gekennzeichnet, daß das Positioniermittel ein Hebel (90) ist, der im Montageelement (6) schwenkbar gelagert ist.

6. Positionsmeßeinrichtung nach einem der Ansprüche 1 bis 5, dadurch gekennzeichnet, daß das Positioniermittel (9) zur Betätigung axial zugänglich ist.

7. Positionsmeßeinrichtung nach einem der Ansprüche 2 bis 6, dadurch gekennzeichnet, daß das Montageelement (6) ein Klemmelement (11) zur radialen Klemmung zwischen dem Montageelement (6) und dem zweiten Objekt (2) aufweist.

8. Positionsmeßeinrichtung nach Anspruch 7, dadurch gekennzeichnet, daß das Klemmelement (11) parallel zur Drehachse (R) ausgerichtet ist und zur Klemmung in dieser axialen Richtung zugänglich und betätigbar ist.

9. Positionsmeßeinrichtung nach Anspruch 7 oder 8, dadurch gekennzeichnet, daß das zweite Objekt (2) einen Montagetubus (2.1) aufweist, an dessen inneren Mantelfläche das Montageelement (6) radial klemmbar ist.

10. Positionsmeßeinrichtung nach Anspruch 9, dadurch gekennzeichnet, daß der Montagetubus (2.1) Bestandteil eines Motors (2) ist, an dessen Welle (1) die Scheibe (3) drehsteif befestigt ist.

11. Verfahren zur Montage einer Abtasteinheit (4) einer Positionsmeßeinrichtung, bei der eine Maßverkörperung (3) an einem ersten Objekt (1) befestigt ist und die Abtasteinheit (4) zur Abtastung der Maßverkörperung (3) mittels folgender Verfahrensschritte an einem zweiten Objekt (2) befestigt wird:
a) ein Abtastelement (5) wird an einem Montageelement (6) mittels eines Positioniermittels (9; 90) in einer ersten Bezugsposition fixiert,
b) die Abtasteinheit (4), bestehend aus dem Abtastelement (5), dem Montageelement (6) und dem Positioniermittel (9; 90) wird in Richtung der Maßverkörperung (3) bewegt, bis ein Element der Abtasteinheit mit der Maßverkörperung (3) oder einem Träger der Maßverkörperung (3) in Kontakt steht,
c) das Montageelement (6) wird an einem zweiten Objekt fixiert,
d) das Abtastelement (5) wird mittels des Positioniermittels (9; 90) an dem Montageelement (6) zu einer zweiten Bezugsposition bewegt, wobei durch diese Verschiebung der Abtastabstand (D) zwischen der Maßverkörperung (3) und dem Abtastelement (5) vorgegeben ist.

## Claims

1. A position measuring device for measuring the relative position between two objects (1, 2) movable relative to one another, in which a measuring entity (3) is sensed by a sensing element (5) of a sensing unit (4), wherein the measuring entity (3) is fixed to the first object (1) and the sensing unit (4) can be fixed to the second object (2) by means of a mounting element (6), characterized in that a positioning means (9; 90) is integrated in the sensing unit (4) and the sensing element (5) can be moved thereby from a first reference position into a second reference position, in that the reference positions are predetermined by the cooperation of elements (5, 6, 9; 5, 6, 90) integrated in the sensing unit (4), whereby the sensing distance (D) between the measuring entity (3) and the sensing element (5) is determined by the movement.

2. A position measuring device according to claim 1, characterized in that the measuring entity (3) is a disc (3) fixed on a shaft (1) for rotation about an axis of rotation (R), with a graduation (3.2) provided on its surface (3.1) lying perpendicular to the axis of rotation (R), and in that the sensing element (5) is guided on the mounting element (6) by the positioning means (9; 90) for axial movement.

3. A position measuring device according to claim 1 or 2, characterized in that the mounting element (6) has first stop surface (6.1), with which a first stop surface (9.1; 90.1) of the position means (9; 90) cooperates in the first reference position, and in that the positioning means (9; 90) and/or the mounting element (6) have second stop surfaces (6.2, 9.2), which determine the second reference position.

4. A position measuring device according to claim 3, characterized in that the positioning means is a screw (9) which is axial movable through a thread (8) in the mounting element (6).

5. A position measuring device according to claim 3, characterized in that the positioning means is a lever (90) which is pivotally mounted in the mounting element (6).

6. A position measuring device according to any of claims 1 to 5, characterized in that the positioning means (9) is axially accessible for actuation.

7. A position measuring device according to any of claims 2 to 6, characterized in that the mounting element (6) comprises a clamp element (11) for radial clamping between the mounting element (6) and the second object (2).

8. A position measuring device according to claim 7, characterized in that the clamp element (11) is aligned parallel to the axis of rotation (R) and is accessible and operable in this axial direction for the clamping.

9. A position measuring device according to claim 7 or 8, characterized in that the second object (2) has a mounting tube (2.1) on whose inner peripheral surface the mounting element (6) can be radially clamped.

10. A position measuring device according to claim 9, characterized in that the mounting tube (2.1) is a component of a motor (2) on whose shaft (1) the disc (3) is mounted torsionally stiffly.

11. A method of mounting a sensing unit (4) of a position measuring device, in which a measuring entity (3) is fixed on a first object (1) and the sensing unit (4) for sensing the measuring entity (3) is fixed by means of the following method steps on a second object (2):
a. a sensing element (5) is fixed on a mounting element (6) by means of a positioning means (9; 90) in a first reference position,
b. the sensing unit (4) consisting of the sensing element (5), the mounting element (6) and the positioning means (9; 90) is moved in the direction of the measuring entity (3), until an element of the sensing unit is in contact with the measuring entity (3) or a support of the measuring entity (3),
c. the mounting element (6) is fixed to a second object,
d. the sensing element (5) is moved by means of the positioning means (9; 90) on the mounting element (6) to a second reference position, whereby the sensing distance (D) between the measuring entity (3) and the sensing element (5) is predetermined by this movement.

## Revendications

1. Dispositif de mesure de position pour mesurer la position relative de deux objets (1, 2) pouvant se déplacer l'un par rapport à l'autre, dans lequel une mesure matérialisée (3) est palpée par un élément palpeur (5) appartenant à une unité de palpage (4), la mesure matérialisée (3) étant fixée au premier objet (1) et l'unité de palpage (4) pouvant être fixée au deuxième objet (2) à l'aide d'un élément de montage (6), caractérisé en ce que dans l'unité de palpage (4) est intégré un moyen de positionnement (9; 90) grâce auquel l'élément palpeur (5) peut être déplacé par rapport à l'élément de montage (6) d'une première position de référence dans une deuxième position de référence, en ce qu'en outre les positions de référence sont prédéterminées par la coopération d'éléments (5, 6, 9; 5, 6, 90) intégrés à l'unité de palpage (4), le décalage de la distance de palpage (D) entre la mesure matérialisée (3) et l'élément palpeur (5) étant prédéterminé.

2. Dispositif de mesure de position selon la revendication 1, caractérisé en ce que la mesure matérialisée (3) est un disque (3) fixé à un arbre (1), qui peut tourner autour d'un axe de rotation (R) et sur la surface (3.1) perpendiculaire à l'axe de rotation (R) duquel il est prévu une graduation (3.2) et en ce que l'élément palpeur (5) peut être déplacé axialement sur l'élément de montage (6) par l'intermédiaire du moyen de positionnement (9; 90).

3. Dispositif de mesure de position selon la revendication 1 ou 2, caractérisé en ce que l'élément de montage (6) comporte une première surface de butée (6.1) avec laquelle coopère une première surface de butée (9.1; 90.1) du moyen de positionnement (9; 90) dans la première position de référence et en ce que le moyen de positionnement (9; 90) et/ou l'élément de montage (6) comporte(nt) des deuxièmes surfaces de butée (6.2, 9.2) qui déterminent la deuxième position de référence.

4. Dispositif de mesure de position selon la revendication 3, caractérisé en ce que le moyen de positionnement est une vis (9) qui, par un filetage (8), peut être déplacée axialement dans l'élément de montage (6).

5. Dispositif de mesure de position selon la revendication 3, caractérisé en ce que le moyen de positionnement est un levier (90) qui est monté pivotant dans l'élément de montage (6).

6. Dispositif de mesure de position selon une des revendications 1 à 5, caractérisé en ce que le moyen de positionnement (9) est accessible dans la direction axiale, à des fins d'actionnement.

7. Dispositif de mesure de position selon une des revendications 2 à 6, caractérisé en ce que l'élément de montage (6) comprend un élément de blocage (11) à des fins de blocage radial entre l'élément de montage (6) et le deuxième objet (2).

8. Dispositif de mesure de position selon la revendication 7, caractérisé en ce que l'élément de blocage (11) est orienté parallèlement à l'axe de rotation (R) et est accessible et peut être actionné dans ladite direction axiale à des fins de blocage.

9. Dispositif de mesure de position selon la revendication 7 ou 8, caractérisé en ce que le deuxième objet (2) comporte un tube de montage (2.1) contre la surface périphérique intérieure duquel l'élément de montage (6) peut être bloqué radialement.

10. Dispositif de mesure de position selon la revendication 9, caractérisé en ce que le tube de montage (2.1) fait partie d'un moteur (2), dont l'arbre (1) est lié de manière rigide en rotation au disque (3).

11. Procédé de montage d'une unité de palpage (4) d'un dispositif de mesure de position, dans lequel une mesure matérialisée (3) est fixée à un premier objet (1) et l'unité de palpage (4) pour le palpage de la mesure matérialisée (3) est fixée au deuxième objet (2) par les étapes de procédé suivantes :
a) on fixe un élément palpeur (5) dans une première position de référence sur un élément de montage (6) à l'aide d'un moyen de positionnement (9. 90),
b) on déplace l'unité de palpage (4) formée de l'élément palpeur (5), de l'élément de montage (6) et du moyen de positionnement (9; 90) en direction de la mesure matérialisée (3) jusqu'à ce qu'un élément de l'unité de palpage soit en contact avec la mesure matérialisée (3) ou un support de ladite mesure matérialisée (3),
c) on fixe l'élément de montage (6) sur un deuxième objet,
d) on déplace l'élément palpeur (5) à l'aide du moyen de positionnement (9; 90) sur l'élément de montage (6) dans une deuxième position de référence, ce déplacement fixant la distance de palpage (D) entre la mesure matérialisée (3) et l'unité de palpage (5).
